**Europäisches Patentamt**

**European Patent Office**

**Office européen des brevets**

(19)

(11) Veröffentlichungsnummer : **0 148 343**
**B1**

(12)

# EUROPÄISCHE PATENTSCHRIFT

(45) Veröffentlichungstag der Patentschrift :
16.06.87

(51) Int. Cl.⁴ : **F 04 D 13/02**, F 04 D 15/00,
F 16 D 59/00, F 16 D 67/02

(21) Anmeldenummer : **84112992.7**

(22) Anmeldetag : **27.10.84**

(54) **Motorpumpenaggregat.**

(30) Priorität : **15.12.83 DE 3345323**

(43) Veröffentlichungstag der Anmeldung :
**17.07.85 Patentblatt 85/29**

(45) Bekanntmachung des Hinweises auf die Patenterteilung : **16.06.87 Patentblatt 87/25**

(84) Benannte Vertragsstaaten :
**BE CH FR GB IT LI NL**

(56) Entgegenhaltungen :
**DE-U- 8 126 762**
**FR-A- 2 216 480**
**GB-A- 361 656**
**GB-A- 669 438**
**GB-A- 1 065 837**
**GB-A- 1 156 253**
**US-A- 2 414 304**
**US-A- 2 718 286**
**US-A- 2 748 896**

(73) Patentinhaber : **Gunther Eheim Fabrik elektromechanischer Erzeugnisse**
**Plochinger Strasse 54**
**D-7301 Deizisau (DE)**

(72) Erfinder : **Eheim, Gunther**
**Plochinger Strasse 54**
**D-7301 Deizisau (DE)**
Erfinder : **Wiedemann, Walter**
**Hohenstaufenstrasse 44**
**D-7301 Deizisau (DE)**

(74) Vertreter : **Kratzsch, Volkhard, Dipl.-Ing.**
**Mülbergerstrasse 65**
**D-7300 Esslingen (DE)**

**Beschreibung**

Die Erfindung bezieht sich auf ein Motorpumpenaggregat für gasförmige oder insbesondere flüssige Medien und als Gebläse, Kompressor, Pumpe od. dgl., insbesondere als Motorpumpe für Aquarienfilter, der ansonsten im Oberbegriff des Anspruchs 1 definierten Art.

Es ist ein Motorpumpenaggregat dieser Art bekannt (DE-U-8 126 762), bei dem die Pumpe so gestaltet ist, daß sie in beiden Umlaufrichtungen des Elektromotors arbeiten kann. Die Flügel am Pumpenrad sind hierbei entsprechend neutral angeordnet, d. h. sie verlaufen radial. Die Pumpenkammer hat überwiegend Kreisform und verengt sich in beiden Drehrichtungen druckseitig in einen durch eine Trennzunge begrenzten Kanal, der zur Ermöglichung beider Laufrichtungen klappsymmetrisch doppelt vorhanden ist. Eine so konzipierte Pumpe ist verständlicherweise ein Kompromiß. Man möchte zwar gern die Pumpe so auslegen, daß sie größere Leistungen ermöglicht. Dies setzt allerdings voraus, daß das Pumpenrad immer in der einen, vorgegebenen Sollumlaufrichtung angetrieben wird und umläuft, von der bei der leistungsoptimierten Konstruktion der Pumpe ausgegangen ist. Das bekannte Motorpumpenaggregat weist als Elektromotor einen selbstanlaufenden Synchronmotor mit permanent-magnetischem Rotor auf. Der Rotor ist z. B. zwei- oder mehrpolig ausgebildet und radial polarisiert, so daß die Magnetpole mit wechselnder Polarität gleichmäßig rings um den Rotorumfang verteilt sind. Der Stator ist dabei vorzugsweise in Klauenpolweise gestaltet. Bei Synchronmotoren dieser Art lassen sich Läuferdrehzahlen in der Größenordnung von 2.000 bis 3.000 U/min erzielen, wobei der Motor eine relativ geringe elektrische Leistung z. B. bis maximal 100 W hat. Derartige Synchronmotoren als Antriebe für genannte Pumpen, insbesondere Motorpumpenaggregate, die vor allem für Aquarienfilter eingesetzt werden, haben sich bewährt. Die Läufer dieser Motoren können in beiden Drehrichtungen von selbst anlaufen. Aus diesem Grund muß die Pumpe konstruktiv so gestaltet sein, daß sie ebenfalls in beiden Umlaufrichtungen arbeiten kann.

Der Erfindung liegt die Aufgabe zugrunde, ein Motorpumpenaggregat der im Oberbegriff des Anspruchs 1 definierten Gattung zu schaffen, bei dem die Anlaufrichtung und Umlaufrichtung des Elektromotors durch Mittel zwischen der Pumpe und der Rotorwelle von vornherein fest vorgegeben ist und die dazu gegensinnige Umlaufrichtung ausgeschlossen ist, wobei ferner die Pumpe ausgehend von dieser fest bestimmten Umlaufrichtung derart leistungsoptimiert werden kann, daß sie ihre volle Leistung allein beim Umlauf in dieser vorbestimmten Richtung erreicht. Ferner liegt der Erfindung die Aufgabe zugrunde, dies mit einfachen, leichten und billigen Mitteln zu verwirklichen und dabei so, daß sich die Abmessungen, insbesondere der Durchmesser des Rotors, des Spaltrohres, in dem der Rotor aufgenommen ist, und/oder des Pumpenrades im Bereich seiner Nabe verglichen mit den Abmessungen bekannter Motorpumpenaggregate dieser Art praktisch nicht vergrößert und wobei ferner nur unwesentlich zusätzliches Gewicht auf die Rotorwelle gebracht wird und die Oberfläche und Eigenreibung, die Verluste bedingen, so klein wie möglich gehalten sind.

Die Aufgabe ist bei einem Motorpumpenaggregat der im Oberbegriff des Anspruchs 1 genannten Art gemäß der Erfindung durch die Merkmale im Kennzeichnungsteil des Anspruchs 1 gelöst.

Eine derartige Zwischenhülse, die in ihrer Wandung zumindest den einen federelastisch ausbiegbaren Bremslappen trägt, läßt sich in der Ausbildung als Kunststoffformteil besonders einfach und billig herstellen und ist klein und leicht. Sie hat nur einen geringen Durchmesser und erfordert keine Vergrößerung der axialen Abmessungen des Rotors mit Pumpenrad bisher bekannter Motorpumpenaggregate. Mittels der Zwischenhülse und des mindestens einen Bremslappens der Nabe des Pumpenrades ist im Verein mit der vorhandenen gehäuseseitigen Büchse eine Bremseinrichtung geschaffen, die ähnlich wie bei Trommelbremsen von Fahrzeugen eine radial von innen nach außen gerichtete Bremskraft selbsttätig erzeugt, um bei Anlauf des Synchronmotors in die nicht gewünschte Drehrichtung den Rotor abzubremsen und eine Drehrichtungsumkehr zur Sollumlaufrichtung zu bewirken. Das Aggregat baut insbesondere im Durchmesser sehr klein, so daß sich dadurch die Durchmessermaße des Rotors und des Pumpenrades mit Nabe praktisch gegenüber bisherigen nicht vergrößern. Man kann diese Teile hinsichtlich ihres Durchmessers so klein wie möglich belassen. Von Vorteil ist auch, daß in Axialrichtung kein zusätzlicher Platz nötig ist, so daß auch in dieser Richtung die Abmessungen unverändert belassen werden können. Vorteilhaft ist ferner, daß auch ältere, bereits in Betrieb befindliche Aggregate einfach durch Austausch des Pumpenrades, ggf. durch Entfernung einer Teilungsnase in der Pumpenkammer, auf die erfindungsgemäße Gestaltung nachträglich umgerüstet werden können.

Ein weiterer wesentlicher Vorteil liegt in nur sehr kleiner Achsreibung, geringer Oberfläche und geringer Eigenreibung der rotorseitigen und pumpenradseitigen Teile dieser Bremseinrichtung, so daß diese nicht etwa zu dadurch bedingten zusätzlichen Reibungsverlusten führt.

Vorteilhafte Weiterbildungen enthalten die Ansprüche 2 und 3. Auf diese Weise ist die Pumpe bezüglich ihrer Leistung so ausgelegt, daß sie bei der einen Sollumlaufrichtung, von der als ausschließliche Laufrichtung ausgegangen werden kann, optimale Leistung bringt. Damit wird eine Steigerung der Leistungsausbeute des Motorpumpenaggregates erzielt.

Weitere vorteilhafte Ausgestaltungen ergeben sich aus den Ansprüchen 4 bis 6. Dadurch ist erreicht, daß die Bremslappen beim Umlauf in Sollumlaufrichtung geschleppt werden, d. h. mit ihrem freien Ende in Umlaufrichtung nachgezogen werden und so selbst bei Materialermüdung und nachlassender federelastischer Rückstelleigenschaft durch Umlauf im Spaltrohr zurückgestellt und zurechtgeschliffen werden.

Weitere vorteilhafte Ausgestaltungen enthalten die Ansprüche 7-11. Der allmähliche Anstieg der Betätigungsfläche und der Auflauffläche verhindert beim Zusammenwirken beider eine Selbsthemmung, die evtl. einer selbsttätigen Lösung der Bremse bei Drehrichtungswechsel des Synchronmotors entgegenwirken könnte. Eine Überlastung des in Bremsstellung herausgedrückten Bremslappens wird durch das Anschlagen des Nockens mit seiner Betätigungsfläche am in Anlaufdrehrichtung folgenden weiteren Festanschlag verhindert. Dadurch ist der Bremslappen entlastet, was zugleich einer evtl. Selbsthemmung zwischen der Betätigungsfläche und der Auflauffläche entgegenwirkt. Auch wird dadurch die Auflaufbewegung begrenzt, z. B. auf etwa zwei Drittel der maximal möglichen Relativbewegung zwischen Betätigungsfläche und Auflauffläche. Die in Sollumlaufrichtung vorn befindliche Anschlagfläche des Nockens garantiert eine flächige Anlage am anderen zugeordneten Festanschlag und damit eine formschlüssige Drehmomentübertragung von der Zwischenhülse auf die Nabe des Pumpenrades. Der vom Nocken zu durchlaufende Umfangswinkel, ausgehend von der in Sollumlaufrichtung antreibenden Anschlagstellung in die dazu gegensinnige Bremsstellung, ist relativ klein, so daß der Rotor keine großen Umfangswinkel bis zum Abstoppen und zur Drehrichtungsumkehr aufgrund der Bremsung durchlaufen muß. Die Anschlagbewegung und auch die Abbremsung geschieht relativ weich und sanft. Dementsprechend weich und beruhigt ist das Anlaufverhalten des Synchronmotors.

Weitere vorteilhafte Maßnahmen ergeben sich aus den Ansprüchen 12-17. Es hat sich gezeigt, daß jeweils drei, vorzugsweise in etwa gleichen Umfangswinkelabständen voneinander angeordnete, miteinander zum Bremsen bzw. Lösen zusammenwirkende Elemente wegen der symmetrischen Wirkung besonders vorteilhaft für ein möglichst gutes Bremsverhalten und Anlaufverhalten des Motors sind. Dadurch werden etwaige Verkantungen des Rotors und/oder des Pumpenrades verhindert. Die Laufruhe ist dadurch insgesamt gesteigert.

Die Erfindung ist nachfolgend anhand von in den Zeichnungen gezeigten Ausführungsbeispielen näher erläutert. Es zeigen :

Figur 1 einen schematischen Längsschnitt eines Motorpumpenaggregats, hier in Form eines den Elektromotor mit Pumpe enthaltenden Kopfes eines Filters für Aquarien,

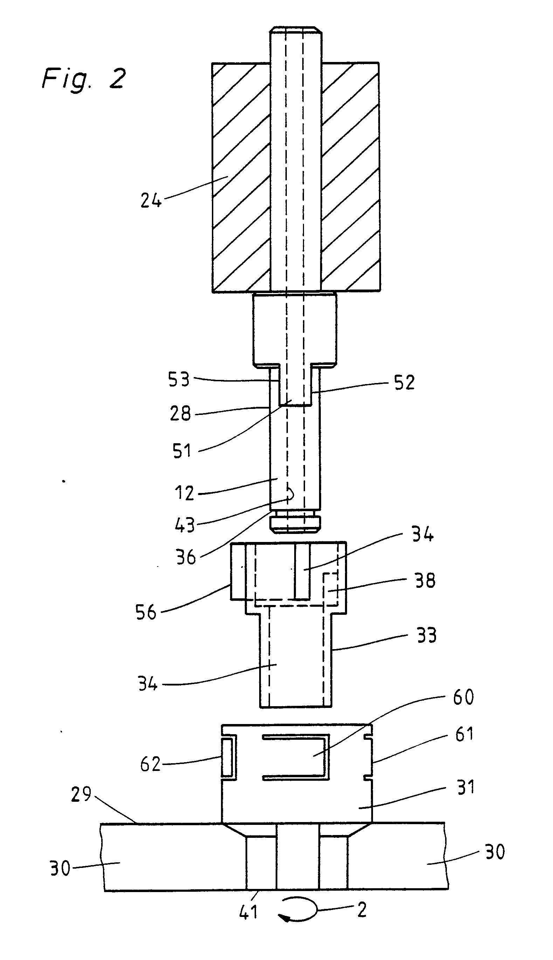

Figur 2 eine schematische Seitenansicht des Rotors des Elektromotors und des Pumpenrades der Pumpe, in einer Explosionsdarstellung und in gegenüber Figur 1 vergrößertem Maßstab,

Figur 3 einen axialen Längsschnitt des Rotors und Pumpenrades gemäß Fig. 2, im zusammengebauten Zustand,

Figur 4 einen schematischen Schnitt entlang der Linie IV-IV in Fig. 3,

Figuren 5 und 6 jeweils eine Einzelheit von Fig. 4, in demgegenüber größerem Maßstab, und zwar im Betrieb in Sollumlaufrichtung bzw. dazu gegensinniger Anlaufdrehrichtung,

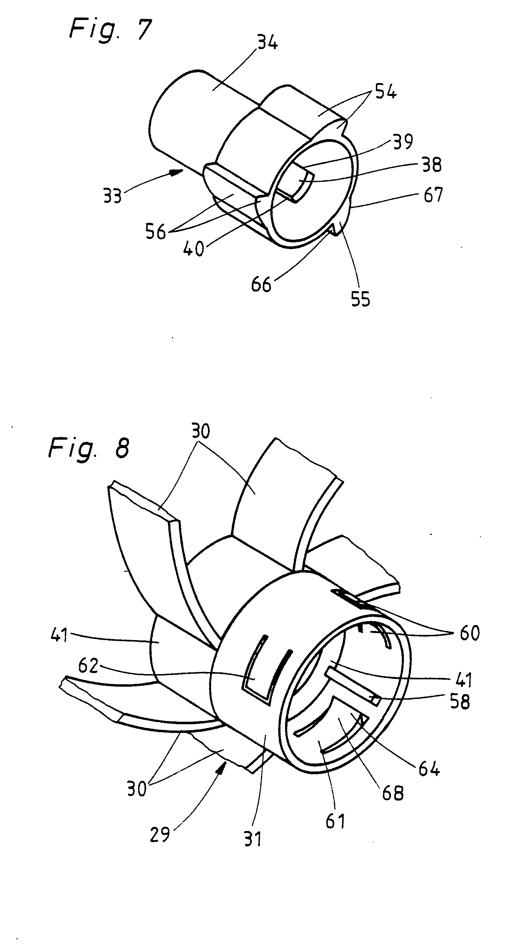

Figuren 7 und 8 jeweils eine schematische, perspektivische Ansicht der Zwischenhülse bzw. des Pumpenrades mit Nabe, vor der Montage.

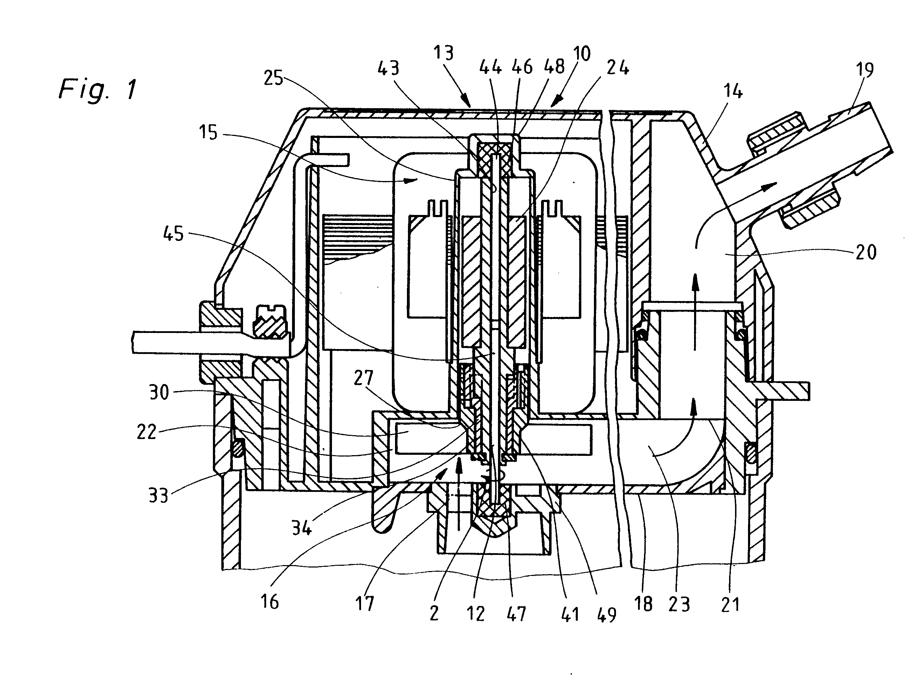

Das nachfolgend erläuterte Motorpumpenaggregat ist praktisch für beliebige gasförmige oder flüssige Medien geeignet und dabei entweder als Gebläse oder als Kompressor, Pumpe od. dgl. Auch wenn in Figur 1 zur Veranschaulichung das Motorpumpenaggregat als Motorpumpe für einen Filter 10 eines Aquariums gezeigt ist, versteht es sich gleichwohl, daß auch vielfältige andere Verwendungen möglich sind. Sieht man von der besonderen Ausbildung am unteren Ende des Rotors und des Pumpenrades mit Pumpenkammer ab, die hier erfindungsgemäß gestaltet sind, entspricht der Filter 10 gemäß Figur 1 ansonsten demjenigen gemäß DE-U 81 26 763. Der Filter 10 ist aus einer hier nicht weiter zu erläuternden Filterpatrone, die mit dem Wasser im Aquariumbecken kommunizierende Ansaugöffnungen aufweist, und einem sich an die Filterpatrone anschließenden Kopf 13 zusammengesetzt. Der Kopf 13 weist ein aus Kunststoff bestehendes Gehäuse 14 mit darin enthaltenem Elektromotor 15 und davon angetriebener Pumpe 16, einen axialen Saugstutzen 17 an einer Bodenplatte 18, einen vom Gehäuse 14 geformten Druckauslaßstutzen 19 und einen im Inneren des Gehäuses 14 gebildeten, etwa achsparallelen Druckkanal 20 auf. Letzterer steht einerseits mit dem Pumpenauslaß 21 und andererseits mit dem Druckauslaßstutzen 19 in Verbindung.

Bestandteil der Pumpe 16 ist eine am Gehäuse 14 angeformte Pumpenkammer 22, die druckseitig in einen sich verengenden Kanal 23 führt.

Der Elektromotor 15 ist als selbstanlaufender Synchronmotor mit einem permanent-magnetischen Rotor 24 ausgebildet, der z. B. zwei- oder mehrpolig ausgebildet und radial polarisiert ist, so daß die Magnetpole mit wechselnder Polarität gleichmäßig rings um den Rotorumfang verteilt sind. Der Synchronmotor ist dabei als Schnelläufer ausgebildet, der z. B. mit 2.000 bis 3.000 U/min umläuft und eine relativ kleine elektrische Leistung von z. B. maximal 100 W hat. Der Rotor 24 ist innerhalb einer koaxialen, etwa topfartigen Büchse 25 aufgenommen und mit dem in Figur 1 oberen Ende drehbar gelagert. Die Büchse 25 befindet sich im Luftspalt zwischen dem Stator 26 und Rotor 24. Sie bildet einen festen Bestandteil des Gehäuses 14. Die Büchse 25 ist zur Pumpenkammer 22 hin offen. Die Öffnung ist mit 27 bezeichnet. Der Rotor 24 weist eine Rotorwelle 28 mit über die Öffnung 27 hinaus vorstehendem Endabschnitt 12 auf, auf dem in axialem Abstand von der Öffnung 27 ein Pumpenrad 29 noch zu beschreibender Art angeordnet ist.

Der Stator 26 ist außerhalb der Büchse 25 in einem letztere etwa topfartig umgebenden, allseitig abgedichteten Gehäuseteil enthalten und vorzugsweise in Klauenpolweise gestaltet, wie an sich bekannt ist (DE-A 22 64 934).

Die Pumpe 16 ist als Kreiselpumpe ausgebildet, die z. B. sechs im wesentlichen radial verlaufende, starre Flügel 30 aufweist, die in Axialabstand von einer zylindrischen Nabe 31 angeordnet sind. An die Nabe 31 schließt sich stufig ein zylindrischer Lagerabsatz 41 kleineren Durchmessers an, der außen die Flügel 30 trägt und der zusammen mit der Nabe 31 in noch zu beschreibender Weise mittelbar auf dem zylindrischen Endabschnitt 12 der Rotorwelle 28 zentriert und gelagert ist. Die Nabe 31 mit Lagerabsatz 41 ist axial verschiebesicher, jedoch ablösbar und mithin austauschbar, gehalten.

Die Rotorwelle 28 enthält eine axial durchlaufende Lagerbohrung 43, die von einer zweigeteilten, aus zwei einzelnen Achsstiften 44, 45 gebildeten Achse paßgenau, jedoch mit freiem Laufspiel, zur Lagerung durchsetzt ist. Aufgrund relativ großer Länge der Achsstifte 44, 45 ist die Rotorwelle 28 darauf präzise zentriert und gelagert. Jeder Achsstift 44, 45 ist endseitig elastisch gehalten, und zwar mittels einer Gummitülle 46 bzw. 47, die gehäusefest gehalten ist. Diese Lagerung durch die Gummitüllen 46, 47 führt mit zu einem sehr ruhigen Lauf des Rotors 24 und des Pumpenrades 29, da die Gummitüllen eine Resonanzabsorption bewirken. Die Laufgeräusche werden dadurch wesentlich reduziert. Dies ist insbesondere für den Aquarienbetrieb von Vorteil.

Für die Halterung jeder Gummitülle 46, 47 sind gehäuseseitig Lagersterne 48 bzw. 49 vorhanden. Der Lagerstern 48 sitzt am dem Pumpenrad 29 abgekehrten Axialende der Büchse 25 und ist mit dieser einstückig. Der andere Lagerstern 49 ist einstückig mit dem Saugstutzen 17 oder mit der Bodenplatte 18. Zumindest dieser Lagerstern 49 enthält Speichen und dazwischen Axialdurchbrüche.

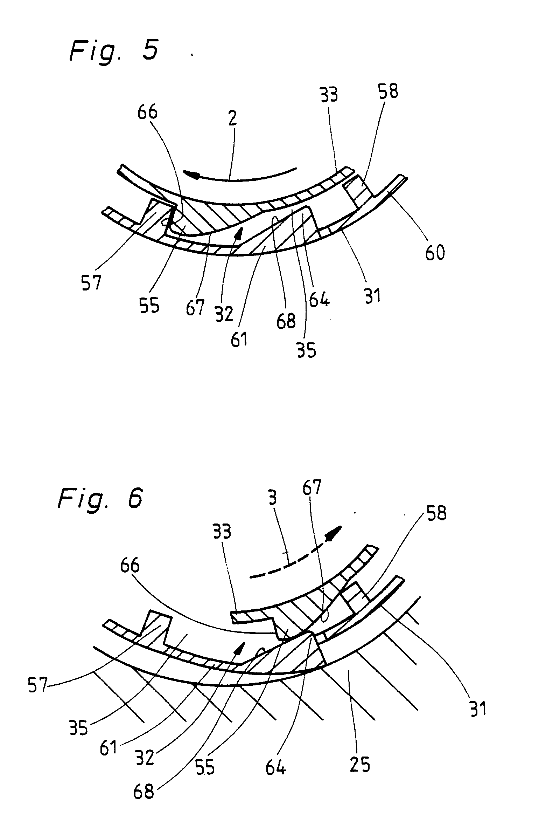

Wie Figur 1 zeigt, ragt im zusammengebauten Zustand die Nabe 31 in die Büchse 25 hinein. Der Filter 10 hat eine Bremseinrichtung 32, die zwischen dem Pumpenrad 29 einerseits und dem das Pumpenrad 29 tragenden Endabschnitt 12 der Rotorwelle 28 andererseits angeordnet ist. Die Bremseinrichtung 32 ist in der einen Sollumlaufrichtung gemäß Pfeil 2, auf die hin die Pumpe 16 ausgelegt ist, unwirksam, dagegen in der dazu gegensinnigen Anlaufdrehrichtung, die in Figur 6 mit gestricheltem Pfeil 3 angedeutet ist, der Rotorwelle 28 selbsttätig wirksam. Sie gelangt dabei selbsttätig in ihre Bremsstellung, in der die Bremseinrichtung 32 ein von der Pumpe 16 herkommendes Bremsmoment für den Rotor 24 erzeugt.

Durch die Bremseinrichtung 32 wird beim Anlauf des Elekttromotors 15 dessen Laufrichtung so beeinflußt, daß der Elektromotor 15 nur in der von vornherein vorgegebenen Sollumlaufrichtung gemäß Pfeil 2 umlaufen kann, wobei diese Sollumlaufrichtung derjenigen des Pumpenrades 29 entspricht, entsprechend der Auslegung der Pumpe 16.

Das Pumpenrad 29 und/oder die Pumpenkammer 22 sind derart ausgebildet, daß die Pumpenleistung allein bei Umlauf des Pumpenrades 29 in Sollumlaufrichtung gemäß Pfeil 2 erreicht wird, daß hingegen bei gegensinnigem Umlauf in Anlaufdrehrichtung (Pfeil 3, Fig. 6) sich innerhalb der Pumpenkammer 22 und zwischen den einzelnen Flügeln 30 des Pumpenrades 29 befindliches Medium ein zur Bremsung des Pumpenrades 29 ausreichendes Bremsmoment am Pumpenrad 29 erzeugt. Wenn also der Elektromotor 15 in der nicht gewünschten Anlaufrichtung gemäß Pfeil 3 (Fig. 6) anlaufen sollte, wird das Pumpenrad 29 bei in der Pumpenkammer 22 befindlichem Medium von diesem gebremst.

Die Pumpe 16 ist als Kreiselpumpe ausgebildet, wobei die Flügel 30 in Sollumlaufrichtung gemäß Pfeil 2 schaufelförmig gekrümmt sind. Die Pumpenkammer 22 ist dabei entsprechend angepaßt. Die Pumpe 16 als nur in der Sollumlaufrichtung gemäß Pfeil 2 arbeitende Pumpe ist dadurch bezüglich ihrer Leistung optimierbar.

Die Bremseinrichtung 32 weist eine Zwischenhülse 33 auf, die einen axial sich anschließenden, im Durchmesser etwas kleineren Zylinderabsatz 34 aufweist, der seinerseits auf dem zylindrischen Endabschnitt 12 der Rotorwelle 28 gelagert ist. Auf die Zwischenhülse 33 ist die Nabe 31 mitsamt dem Lagerabsatz 41 im wesentlichen paßgenau aufgesteckt, wobei der Lagerabsatz 41 auf dem Zylinderabsatz 34 der Zwischenhülse 33 zentriert und gelagert ist, während zwischen der Nabe 31 und dem auf gleichem Axialbereich sich befindlichen übrigen Teil der Zwischenhülse 33 ein radialer Ringraum 35 verbleibt. Am Ende der Rotorwelle 28 ist in einer Nut 36 ein Sprengring 37 gehalten, durch den die aufgesteckte Zwischenhülse 33 und Nabe 31 mit Pumpenrad 29 axial verschiebesicher auf dem Endabschnitt 12 gehalten sind.

Die Zwischenhülse 33 ist relativ zur Rotorwelle 28 um einen wesentlichen Umfangswinkel frei drehbar. Dieser Umfangswinkel kann z. B. etwa 180° betragen. Auf diese Weise ist erreicht, daß beim Anlauf des Elektromotors 15 der Rotor 24 zunächst ohne Last eine Anlaufdrehung vollführen kann, bis nach Durchlaufen dieses genannten Umfangswinkels die Zwischenhülse 33 mitgenommen wird.

Die Zwischenhülse 33 weist einen inneren Radialanschlag 38 auf, der sich z. B. über einen Bogenwinkel von 45° oder mehr erstreckt und zwei stirnseitige Anschlagflächen 39, 40 aufweist. Dem Radialanschlag 38 ist an der Rotorwelle 28 ein entsprechender Anschlag 51 zugeordnet, der ebenfalls zwei stirnseitige Anschlagflächen 52, 53 hat. Beim Anlaufen des Rotors 24 in Sollumlaufrichtung gemäß Pfeil 2 schlägt der Anschlag 51 nach Durchlaufen des genannten freien Umfangswinkels mit seiner Anschlagfläche 53 an an der Anschlagfläche 40 des Radialanschlages 38 der Zwischen hülse 33, die dann in Sollumlaufrichtung gemäß Pfeil 2 mitgenommen wird. Bei dazu gegensinniger Anlaufdrehrichtung gemäß Pfeil 3 (Fig. 6) schlägt der Anschlag 51 mit der Anschlagfläche 52 an der Anschlagfläche 39 des Radialanschlages 38 an. Während bei der erstgenannten Drehrichtung der normale Antrieb des Pumpenrades 29 erfolgt, geschieht bei der dazu gegensinnigen Anlaufdrehrichtung gemäß Pfeil 3 das Abbremsen des Rotors 24.

Das Pumpenrad 29 sitzt mitsamt der Nabe 31 auf der Zwischenhülse 33 und ist relativ zu dieser zumindest in Grenzen drehbar gehalten. Die Zwischenhülse 33 weist drei äußere, radial überstehende Nocken 54, 55, 56 auf, die jeweils gleich gestaltet und als etwa achsparalleler Steg ausgebildet sind. Die drei Nocken 54 bis 56 sind in gleichen Umfangswinkelabständen voneinander angeordnet. Die Zwischenhülse 33 bildet mitsamt dem Zylinderabsatz 34, dem inneren Radialanschlag 38 und den äußeren Nocken 54 bis 56 ein einstückiges Kunststofformteil.

Die Nabe 31 des Pumpenrades 29 weist auf ihrer Innenseite drei in gleichen Umfangswinkelabständen angeordnete Festanschläge 57, 58, 59 auf, die wie achsparallele Rippen radial nach innen vorstehen und in Axialrichtung bis an den Beginn des zylindrischen, im Durchmesser kleineren Lagerabsatzes 41 reichen. Außerdem weist die Nabe 31 auf jedem Umfangswinkelbereich, der zwischen zwei aufeinanderfolgenden Festanschlägen 57 bis 59 vorhanden ist, jeweils einen Bremslappen 60 bzw. 61 bzw. 62 auf. Die drei Bremslappen 60 bis 62 sind also ebenfalls in im wesentlichen gleichen Umfangswinkelabständen voneinander angeordnet. Die Nabe 31 bildet mitsamt dem Lagerabsatz 41, den Flügeln 30 sowie den inneren Festanschlägen 57 bis 59 und den Bremslappen 60 bis 62 ein einstückiges Kunststofformteil. Jeder Bremslappen 60 bis 62 trägt eine radial nach innen in den Ringraum 35 hinein etwa bis auf das Maß jedes Festanschlages 57 bis 59 vorspringende, daran angeformte Nase 62, 63, 64. Weitere Einzelheiten sind nachfolgend der besseren Übersicht wegen allein anhand des Nockens 55, der Festanschläge 57, 58 und des Bremslappens 61 mit Nase 64 (Fig. 5, 6) beschrieben. Jeder Bremslappen 60 bis 62 ist im wesentlichen tangential aus der Nabe 31 und über deren äußere Umfangsfläche hinaus federelastisch ausbiegbar. Das freie, ausfederbare Ende jedes Bremslappens 60 bis 62 befindet sich dabei in Sollumlaufrichtung gemäß Pfeil 2 gesehen hinter dem Fußbereich jedes Bremslappens 60 bis 62, mit dem der Bremslappen 60 bis 62 noch einstückig mit dem Material der Nabe 31 verbunden ist. Jeder Bremslappen 60 bis 62 ist als Kreisbogenabschnitt ausgebildet, der abgesehen von dem genannten Fußabschnitt im übrigen relativ zur Nabe 31 frei ausfederbar sowie selbsttätig zurückfederbar ist. Alle Bremslappen 60 bis 62 befinden sich dabei auf dem Axialabschnitt der Nabe 31, der von unten her durch die Öffnung 27 hindurch in die Büchse 25 hineinragt. Es ist ersichtlich, daß beim Ausbiegen des Bremslappens 61 (Fig. 6) aus einer stabilen Ruhestellung (Fig. 5) heraus der Bremslappen 61 mit seiner Außenseite an der Innenseite der Büchse 25 zur Anlage kommt, die dann als Bremsfläche dient. Da sich in dieser Bremsstellung der beschriebene, mit dem Material der Nabe 31 einstückige Fußbereich des Bremslappens 61 in Anlaufdrehrichtung gemäß Pfeil 3 hinter dem freien Bremslappenende befindet, führt eine die Bremsung bewirkende Haftreibung zu stärkerer Herausstellung des Bremslappens 61 und damit zu verstärkter Bremswirkung. Es ergibt sich ein Servoeffekt.

Bei gegensinnig, d. h. in Sollumlaufrichtung gemäß Pfeil 2 (Fig. 5), umlaufender Rotorwelle 28 dagegen kann der Bremslappen 61 wieder frei in die unwirksame Stellung gemäß Figur 5 zurückfedern, in der er außer Eingriff ist.

Der Nocken 55 — wie auch die übrigen Nocken 54 und 56 — trägt auf der einen Seite, die in Sollumlaufrichtung gemäß Pfeil 2 weist, eine abrupt stufenförmige, etwa radiale Anschlagfläche 66. Auf der anderen, in dazu gegensinniger Anlaufdrehrichtung gemäß Pfeil 3 weisenden Seite trägt der Nocken 55 eine allmählich, insbesondere zumindest im wesentlichen etwa bogenförmig oder tangential, von der äußeren Umfangsfläche der Zwischenhülse 33 radial nach außen ansteigende Betätigungsfläche 67, die der Nase 64 des Bremslappens 61 zugeordnet ist. Die Nase 64 des Bremslappens 61 — wie auch die übrigen Nasen 63, 65 der anderen Bremslappen 60 bzw. 62 — verdickt sich, in der Anlaufdrehrichtung gemäß Pfeil 3 (Fig. 6) gesehen, zum frei ausfederbaren Ende hin zunehmend etwa radial nach innen unter Bildung einer allmählich ansteigenden Auflauffläche 68 für die Betätigungsfläche 67 des zugeordneten Nockens 55 der Zwischenhülse 33.

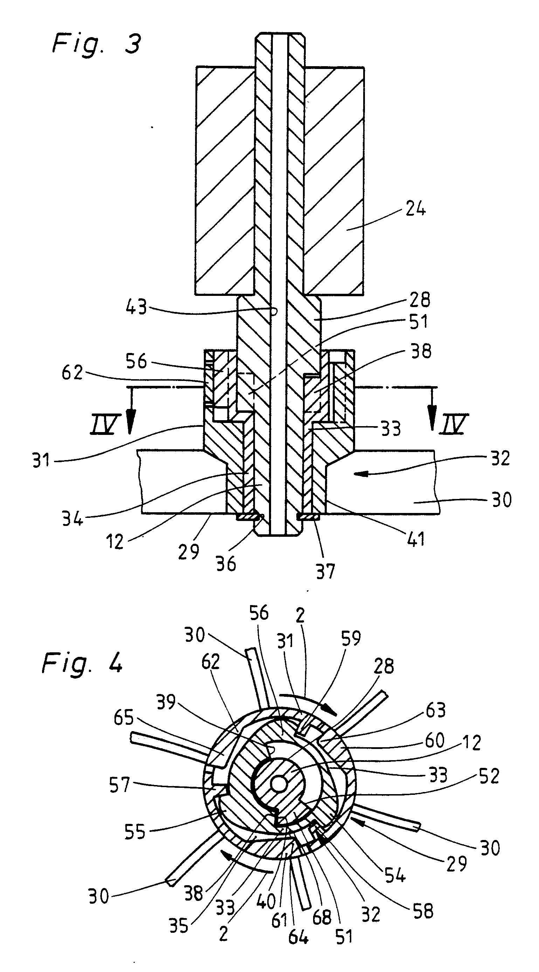

Die Wirkungsweise der Bremseinrichtung 32 ist. wie folgt. Dabei wird von der Relativstellung gemäß Figur 3 bis 5 und stillstehendem Elektromotor 15 ausgegangen. Wird letzterer eingeschaltet und sollte der Rotor 24 dabei die Anlaufdrehrichtung gemäß gestricheltem Pfeil 3 in Fig. 6, dort also im Gegenuhrzeigersinn, nehmen, so läuft zunächst die Rotorwelle 28 bei ansonsten stillstehendem Pumpenrad 29 mit Nabe 31 und stillstehender Zwischenhülse 33 in Pfeilrichtung 3 an, unter Durchlaufen des in Figur 4 sichtbaren Umfangswinkelspieles, bis die rotorseitige Anschlagfläche 52 an der Anschlagfläche 39 des Radialanschlages 38 der Zwischenhülse 33 anschlägt. Durch diesen Formschluß ist der Rotor 24 bestrebt, nun die Zwischenhülse 33 und außerdem das Pumpenrad 29 mit Nabe 31 gegensinnig zum Pfeil 2 mitzunehmen. Das Pumpenrad 29 wird dabei jedoch durch zwischen den einzelnen Flügeln 30 und in der Pumpenkammer 22 noch befindliches Medium, z. B. Wasser aus dem Aquarienbecken, abgebremst, wobei dieses Medium auf das Pumpenrad 29 ein Haltemoment ausübt. Der Rotor 24 mitsamt der Zwischenhülse 33 läuft dabei weiter in Pfeilrichtung 3 um, bei demgegenüber festgehaltenem Pumpenrad 29. Dabei schlägt der Nocken 55 mit der Betätigungsfläche 67 an an der Auflauffläche 68 der Nase 64 am Bremslappen 61. Durch die Relativdrehung wird über den Nocken 55 der Bremslappen 61 allmählich radial nach außen gedrückt, so daß er über die äußere Umfangsfläche der Nabe 31 radial vorsteht und dabei mit seiner Außenfläche in Bremskontakt mit der Innenfläche der Büchse 25 gelangt. Das so erzeugte Bremsmoment reicht aus, um den Rotor 24 abzubremsen und eine Drehrichtungsumkehr des Synchronmotors 15 dadurch herbeizuführen. Bei der Erzeugung der Bremskraft durch Ausfedern des Bremslappens 61 schlägt der Nocken 55 am dem Bremslappen 61 vorgelagerten Festanschlag 58 an unter Begrenzung der auf den Bremslappen 61 ausgeübten Kraft. Dadurch ist also sichergestellt, daß die Bremskraft nicht so stark wird, daß etwa Selbsthemmung erreicht wird. Die allmählich ansteigenden Betätigungsfläche 67 und Auflauffläche 68 verhindern ebenfalls, daß sich der Nocken 55 und die Nase 64 bei der Bremsbetätigung so verkeilen, daß hier Selbsthemmung eintritt.

Wenn also die Drehrichtungsumkehr des Rotors 24 durch diesen Bremseingriff bewirkt worden ist, dreht sich zunächst die Rotorwelle 28 relativ zum noch in Bremsstellung befindlichen Pumpenrad 29 einschließlich der Zwischenhülse 33 um den freien Umfangswinkel in Pfeilrichtung 2, bis der Anschlag 51 mit seiner Anschlagfläche 53 an der Anschlagfläche 40 des Radialanschlages 38 der Zwischenhülse 33 anschlägt und dadurch dann die Zwischenhülse 33 in Pfeilrichtung 2 von der Rotorwelle 28 mitgenommen wird. Bis dahin befindet sich die Nabe 31 noch in der beschriebenen Bremsstellung. Erst wenn hiernach der Nocken 55 bei der Sollumlaufbewegung in Pfeilrichtung 2 aus der Stellung gemäß Figur 6 zurück in diejenige gemäß Fig. 5 gedreht wird, und dadurch keine Radialkraft mehr auf den Bremslappen 61 einwirkt, federt der Bremslappen 61 selbsttätig frei wieder in seine Ausgangsstellung gemäß Fig. 5 zurück, in der die Außenfläche des Bremslappens 61 zumindest im wesentlichen wieder bündig mit der sonstigen zylindrischen Oberfläche der Nabe 31 ist. Bei dieser Drehung schlägt der Nocken 55 mit seiner Anschlagfläche 66 flächig an am inneren Festanschlag 57 der Nabe 31. Dadurch wird nun das auf die Zwischenhülse 33 in Pfeilrichtung 2 wirkende Antriebsmoment übertragen auf die Nabe 31 und damit auf das Pumpenrad 29. Sollte der Bremslappen 61 noch nicht völlig selbsttätig aus seiner vorherigen Bremsstellung zurück in diejenige gemäß Figur 5 gefedert sein, so stört dies gleichwohl den Rotorumlauf nicht, da bei der Sollumlaufrichtung gemäß Pfeil 2 das ausfederbare freie Ende des Bremslappens 61 in Umlaufrichtung hinten liegt und geschleppt wird. Es kann sich mithin störungsfrei zusammen mit der Zylinderinnenfläche der Büchse 25 einschleifen.

Dank der beschriebenen Bremseinrichtung 32 ergeben sich rotorseitig und auch pumpenseitig im Vergleich zu einer Anordnung ohne eine solche Bremseinrichtung 32 praktisch keine größeren Durchmesser und Abmessungen.

Vorteilhaft ist ferner, daß sich nur sehr geringe Achsreibung auf sehr kleinen Durchmessern und Flächen ergibt, so daß praktisch keinerlei Verluste zu verzeichnen sind. Der Elektromotor 15 hat durch die Bremseinrichtung und auch durch die geteilten Achsstifte 44, 45 und elastische Halterung dieser ein gutes Ausgleichsvermögen. Es ergibt sich eine außerordentlich gute Laufruhe. Die Anlaufbedingungen für den Elektromotor 15 sind dank der Bremseinrichtung 32 sehr gut. Ein hartes, lautes Anschlagen, wie dies sonst bei mit Exzentern oder Anschlägen arbeitenden Einrichtungen zur Drehrichtungsbestimmung zu verzeichnen ist, ist vermieden. Um je Nocken von der antreibenden Stellung gemäß Figur 5 in Sollumlaufrichtung gemäß Pfeil 2 in die Bremsstellung gemäß Figur 6 mit gegensinniger Anlaufdrehrichtung gemäß Pfeil 3 zu gelangen, braucht nur ein kleiner Umfangswinkel durchlaufen zu werden, wobei es, bezogen auf den Nocken 55, ausreichend ist, wenn dieser nur maximal etwa zwei Drittel der Anlauffläche 68 der Nase 64 am Bremslappen 61 durchläuft und schon dann am nachfolgenden Festanschlag 58 weich anschlägt. Dadurch ist auf jeden Fall eine Selbsthemmung zwischen Nocken 55 und Nase 64 verhindert. Es ist sichergestellt, daß bei der erzeugten Drehrichtungsumkehr eine selbsttätige Zurückbewegung in die frei umlaufende Stellung gemäß Figur 5 geschieht. Die Bremseinrichtung 32 ist bei allem außerordentlich einfach, leicht und kostengünstig. Ihre einzelnen Elemente lassen sich gleich bei der Formgebung mit einbringen, so z. B. die einzelnen Elemente an der Nabe 31 des Pumpenrades 29. Dies erfordert praktisch keinerlei Mehrkosten. Die zusätzlich dazwischengesteckte Zwischenhülse 33 ist als einstückiges Kunststofformteil ebenfalls einfach und billig herstellbar. Sie verteuert den gesamten Filter 10 praktisch nicht.

**Patentansprüche**

1. Motorpumpenaggregat für gasförmige oder insbesondere flüssige Medien und als Gebläse, Kompressor, Pumpe od. dgl. , insbesondere als Motorpumpe für Aquarienfilter, das ein Gehäuse (14) mit einem Elektromotor (15) aufweist, der als selbstanlaufender Synchronmotor mit permanent-magnetischem Rotor (24) ausgebildet ist, welcher innerhalb einer koaxialen, im Luftspalt liegenden, etwa topfartigen Büchse (25) aufgenommen ist und an einem Endabschnitt (12) auf seiner Rotorwelle (28) ein in einer Pumpenkammer (22) befindliches Pumpenrad (29) mit Nabe (31) trägt, die mit einem Axialabschnitt in die Büchse (25) hineinragt, wobei der Stator (26) in einem die Büchse (25) umgebenden, vorzugsweise abgedichteten, Gehäuseteil enthalten ist und die Rotorwelle (28) auf einer Achse (44, 45) drehbar gelagert ist, die mit einem Ende in der Buchse (25) und mit ihrem anderen Ende in einem anderen Teil (49, 18) des Gehäuses (14) drehbar und vorzugsweise elastisch gehalten ist, dadurch gekennzeichnet, daß zwischen dem Pumpenrad (29) einerseits und dem Endabschnitt (12) der Rotorwelle (28) andererseits eine von der Rotorwelle (28) mitgenommene Zwischenhülse (33) angeordnet ist, auf der das Pumpenrad (29) mitsamt seiner Nabe (31) zumindest in Grenzen relativ dazu drehbar gehalten ist, und daß die Zwischenhülse (33) zumindest einen äußeren, radial überstehenden Nocken (54 bis 56) aufweist, dem auf der Innenseite der Nabe (31) des Pumpenrades (29) eine in die Bahn des Nockens (54 bis 56) radial nach innen vorspringende Nase (63 bis 65) zugeordnet ist, die an einem etwa tangential aus der Nabe (31) und über deren äußere Umfangsfläche hinaus federelastisch ausbiegbaren Bremslappen (60 bis 62) angeordnet ist, der sich auf dem in die Büchse (25) hineinragenden Axialabschnitt der Nabe (31) befindet und der in einer Sollumlaufrichtung der Rotorwelle (28) mit Pumpenrad (29) unwirksam ist, hingegen in einer dazu gegensinnigen Anlaufdrehrichtung der Rotorwelle (28) mittels des Nockens (54 bis 56) der Zwischenhülse (33) ausfederbar ist und in der ausgeferderten Stellung mit der Innenseite der Büchse (25) als Bremsfläche in bremsender Anlageberührung steht und ein Bremsmoment am Pumpenrad (29) für die Rotorwelle (28) erzeugt.

2. Motorpumpenaggregat nach Anspruch 1, dadurch gekennzeichnet, daß das Pumpenrad (29) derart ausgebildet ist, daß die Pumpenleistung allein bei Umlauf des Pumpenrades (29) in Sollumlaufrichtung erreichbar ist, hingegen bei Umlauf in dazu gegensinniger Drehrichtung sich innerhalb der Pumpenkammer (22) und zwischen den Flügeln (30) des Pumpenrades (29) befindliches Medium ein für die Ausfederung des mindestens einen Bremslappens (60 bis 62) ausreichendes Abbremsmoment erzeugt.

3. Motorpumpenaggregat nach Anspruch 2, dadurch gekennzeichnet, daß das Pumpenrad (29) im wesentlichen radiale Flügel (30) aufweist, die in Sollumlaufrichtung schaufelförmig gekrümmt sind.

4. Motorpumpenaggregat nach einem der Ansprüche 1 bis 3, dadurch gekennzeichnet, daß die Zwischenhülse (33) auf dem Endabschnitt (12) der Rotorwelle (28) axial verschiebesicher gehalten und relativ zur Rotorwelle (28) um einen wesentlichen Umfangswinkel frei drehbar ist und zumindest einen Radialanschlag (38) aufweist, an dem nach Durchlaufen des Umfangswinkels in der einen oder anderen Drehrichtung ein radialer Anschlag (51) der Rotorwelle (28) zur Drehmitnahme in Sollumlaufrichtung bzw. zum Abstoppen in dazu gegensinniger Anlaufdrehrichtung anschlägt.

5. Motorpumpenaggregat nach einem der Ansprüche 1 bis 4, dadurch gekennzeichnet, daß die Nabe (31) des Pumpenrades (29) auf ihrer Innenseite einen radialen Festanschlag (57 bis 59) aufweist, der der einen, in Sollumlaufrichtung weisenden Seite des Nockens (54 bis 56) der Zwischenhülse (33) zugeordnet ist.

6. Motorpumpenaggregat nach einem der Ansprüche 1 bis 5, dadurch gekennzeichnet, daß der mindestens eine Bremslappen (60 bis 62) als Kreisbogenabschnitt ausgebildet ist, der am einen Kreisbogenabschnittende einstückig mit dem Material der Nabe (31) ist und im übrigen relativ zur Nabe frei ausfederbar sowie selbsttätig zurückfederbar ist.

7. Motorpumpenaggregat nach einem der Ansprüche 1-6, dadurch gekennzeichnet, daß der mindestens eine Bremslappen (60 bis 62) bei Umlauf der Rotorwelle (28) in Sollumlaufrichtung außer Eingriff und frei eingefedert ist, dagegen bei dazu gegensinniger Anlaufdrehrichtung der Rotorwelle (28) mit Zwischenhülse (33) von deren zugeordneten Nocken (54 bis 56) in die ausgefederte Bremsstellung bringbar ist.

8. Motorpumpenaggregat nach einem der Ansprüche 1-7, dadurch gekennzeichnet, daß der mindestens eine Nocken (54 bis 56) als etwa achsparalleler Steg ausgebildet ist.

9. Motorpumpenaggregat nach einem der Ansprüche 1-8, dadurch gekennzeichnet, daß der mindestens eine Nocken (55) auf der einen Seite, die in Sollumlaufrichtung weist, eine abrupt stufenförmige, etwa radiale Anschlagfläche (66) und auf der anderen, in dazu gegensinniger Anlaufdrehrichtung weisenden Seite eine allmählich, insbesondere etwa tangential oder bogenförmig von der äußeren Umfangsfläche der Zwischenhülse (33) radial nach außen ansteigende Betätigungsfläche (67) für den Bremslappen (61) aufweist.

10. Motorpumpenaggregat nach einem der Ansprüche 1-9, dadurch gekennzeichnet, daß die Nabe (31) auf ihrer Innenseite in geringem Umfangswinkelabstand auf das frei ausfederbare Ende des Bremslappens (61) folgend einen weiteren Festanschlag (58) aufweist, an dem die Zwischenhülse (33) mit ihrem Nocken (55) in der ausgefederten Stellung des zugeordneten Bremslappens (61) unter Begrenzung der auf den Bremslappen (61) ausgeübten Kraft in Umfangsrichtung anschlägt.

11. Motorpumpenaggregat nach einem der Ansprüche 1-10, dadurch gekennzeichnet, daß die Nase (64) des mindestens einen Bremslappens (61), in der der zu bremsenden Anlaufdrehrichtung (Pfeil 3) entsprechenden Umlaufrichtung gesehen, sich zum freien, ausfederbaren Ende hin zunehmend radial nach innen verdickt unter Bildung einer allmählich ansteigenden Auflauffläche (68) für die Betätigungsfläche (67) des zugeordneten Nockens (55) der Zwischenhülse (33).

12. Motorpumpenaggregat nach einem der Ansprüche 1-11, dadurch gekennzeichnet, daß die Zwischenhülse (33) drei äußere Nocken (54 bis 56) aufweist.

13. Motorpumpenaggregat nach Anspruch 12, dadurch gekennzeichnet, daß die Nabe (31) drei Festanschläge (57 bis 59) und drei Bremslappen (60 bis 62) aufweist, von denen sich jeder auf einem Umfangswinkelbereich zwischen jeweils zwei Festanschlägen (57 bis 59) erstreckt.

14. Motorpumpenaggregat nach einem der Ansprüche 1-13, dadurch gekennzeichnet, daß die Nabe (31) mit den Flügeln (30) des Pumpenrades (29) sowie dem mindestens einen Festanschlag (57 bis 59) und mindestens einen Bremslappen (60 bis 62) ein einstückiges Kunststofformteil bildet.

15. Motorpumpenaggregat nach einem der Ansprüche 1-13, dadurch gekennzeichnet, daß die Zwischenhülse (33) mit dem mindestens einen äußeren Nocken (54 bis 56) und dem inneren Radialanschlag (38) ein einstückiges Kunststofformteil bildet.

16. Motorpumpenaggregat nach einem der Ansprüche 1-15, dadurch gekennzeichnet, daß sich an die Nabe (31) ein zylindrischer Lagerabsatz (41) stufig anschließt, der außen die Flügel (30) des Pumpenrades (29) trägt und auf einem zugeordneten Zylinderabsatz (34) der Zwischenhülse (33) gelagert ist, der seinerseits auf einem Zylinderabschnitt (12) des Rotorwellenendabschnittes gelagert ist.

17. Motorpumpenaggregat nach einem der Ansprüche 1-16, dadurch gekennzeichnet, daß die Zwischenhülse (33) und Nabe (31) mit Pumpenrad (29) auf dem Ende der Rotorwelle (28) mit axial aneinander angreifenden Axialsicherungsmitteln untereinander und/oder mittels zusätzlicher Axialsicherungsmittel axial gesichert gehalten sind.

**Claims**

1. Motor-pump unit for gaseous or especially liquid media and as blower, compressor, pump or the like, especially as motor pump for aquarium filters, which comprises a housing (14) with an electric motor (15) which is formed as self-starting synchronous motor with permanentmagnetic rotor (24) which is accommodated within a coaxial somewhat pot-type bush (25) lying in the air gap and carries on an end section (12) on its rotor shaft (28) a pump wheel (29) with hub (31) situated in a pump chamber (22) which hub extends with an axial section into the bush (25), while the stator (26) is contained in a preferably sealed housing part surrounding the bush (25) and the rotor shaft (28) is rotatably mounted on a spindle (44, 45) which is held rotatably and preferably elastically with one end in the bush (25) and with its other end in another part (49, 18) of the housing (14), characterised in that between the pump wheel (29) for the one part and the end section (12) of the rotor shaft (28) for the other part there is arranged an intermediate sleeve (33) entrained by the rotor shaft (28), on which sleeve the pump wheel (29) together with its hub (31) is held at least limitedly rotatably in relation thereto, and in that the intermediate sleeve (33) comprises at least one outer, radially protruding cam (54 to 56) with which there is associated on the inner side of the hub (31) of the pump wheel (29) a nose (63 to 65) protruding radially inwards into the path of the cam (54 to 56), which nose is arranged on a brake tab (60 to 62) bendable resiliently elastically somewhat tangentially out of the hub (31) and beyond its outer circumferential surface, which tab is situated on the axial section of the hub (31) extending into the bush (25) and is ineffective in an intended direction of rotation of the rotor shaft (28) with pump wheel (29) while in a starting direction of rotation of the rotor shaft (28) opposite thereto it can be sprung out by means of the cam (54 to 56) of the intermediate sleeve (33) and in the sprung-out position is in abutting braking contact with the inner side of the bush (25) as brake surface and generates a braking moment on the pump wheel (29) for the rotor shaft (28).

2. Motor-pump unit according to Claim 1 characterised in that the pump wheel (29) is of such formation that the pump performance is achievable solely on rotation of the pump wheel (29) in the intended direction of rotation, whereas in the case of rotation in the opposite direction of rotation thereto medium situated within the pump chamber (22) and between the vanes (30) of the pump wheel (29) generates a braking moment sufficing for the springing out of the at least one brake tag (60 to 62).

3. Motor-pump unit according to Claim 2, characterised in that the pump wheel (29) comprises substantially radial vanes (30) which are curved in scoop form in the intended direction of rotation.

4. Motor-pump unit according to one of Claims 1 to 3, characterised in that the intermediate sleeve (33) is held axially non-displaceably on the end section (12) of the rotor shaft (28) and is freely rotatable by a substantial circumferential angle in relation to the rotor shaft (28) and comprises at least one radial stop (38) on which, after the travelling of the circumferential angle in the one or the other direction of rotation a radial stop (51) of the rotor shaft (28) strikes for rotational drive in the intended direction of rotation or for halting in the starting direction of rotation opposite thereto.

5. Motor-pump unit according to one of Claims 1 to 4, characterised in that the hub (31) of the pump wheel (29) comprises on its inner side a radial fixed stop (57 to 59) which is allocated to the one side, facing in the intended direction of rotation, of the cam (54 to 56) of the intermediate sleeve (33).

6. Motor-pump unit according to one of Claims 1 to 5, characterised in that the at least one brake tab (60 to 62) is formed as an arcuate section which is integral at the one arcuate section end with the material of the hub (31) and otherwise can be sprung out freely and sprung back automatically in relation to the hub.

7. Motor-pump unit according to one of Claims 1 to 6, characterised in that the at least one brake tab (60 to 62) is out of engagement and freely sprung in when the rotor shaft (28) is rotating in the intended direction of rotation, but in the case of the starting direction of rotation of the rotor shaft (28) with intermediate sleeve (33) opposite thereto is bringable bv the cams (54 to 56) associated with the intermediate sleeve (33) into the sprung-out braking position.

8. Motor-pump unit according to one of Claims 1-7, characterised in that the at least one cam (54 to 56) is formed as a flange approximately parallel with the axis.

9. Motor-pump unit according to one of Claims 1-8, characterised in that the at least one cam (55) comprises on the one side facing in the intended direction of rotation an abruptly step-shaped, somewhat radial abutment face (66) and on the other side, facing in the starting direction of rotation opposite thereto, an actuating face (67) rising radially outwards gradually, especially approximately tangentially or arcuately, from the outer circumferential surface of the intermediate sleeve (33), for the brake tag (61).

10. Motor-pump unit according to one of Claims 1-9, characterised in that the hub (31) comprises on its inside, following the freely outwardly springable end of the brake tag (61) at a short circumferential angular distance, a further fixed stop (58) upon which the intermediate sleeve (33) strikes with its cam (55) in the sprung-out position of the associated brake tag (61) with limitation of the force in the circumferential direction exerted upon the brake tag (61).

11. Motor-pump unit according to one of Claims 1 to 10, characterised in that the nose (64) of the at least one brake tag (61), seen in the direction of rotation corresponding to the starting direction of rotation to be braked (arrow 3), thickens increasingly radially inwards towards the free, outwardly springable end, forming a gradually rising ramp face (68) for the actuating face (67) of the associated cam (55) of the intermediate sleeve (33).

12. Motor-pump unit according to one of Claims 1-11, characterised in that the intermediate sleeve (33) comprises three outer cams (54 to 56).

13. Motor-pump unit according to Claim 12, characterised in that the hub (31) comprises three fixed stops (57 to 59) and three brake tags (60 to 62), each of which extends on a circumferential angle zone between two fixed stops (57 to 59) in each case.

14. Motor-pump unit according to one of Claims 1-13, characterised in that the hub (31) forms a one-piece synthetic plastics material moulding with the vanes (30) of the pump wheel (29), with the at least one fixed stop (57 to 59) and with at least one brake tag (60 to 62).

15. Motor-pump unit according to one of Claims 1-13, characterised in that the intermediate sleeve (33) forms a one-piece synthetic plastics material moulding with the at least one outer cam (54 to 56) and the inner radial stop (38).

16. Motor-pump unit according to one of Claims 1-15, characterised in that the hub (31) is adjoined in stepped manner by a cylindrical shoulder (41) which externally carries the vanes (30) of the pump wheel (29) and is mounted on an associated cylindrical shoulder (34) of the intermediate sleeve (33) which in turn is mounted on a cylindrical section (12) of the rotor shaft end section.

17. Motor-pump unit according to one of Claims 1-16, characterised in that the intermediate sleeve (33) and hub (31) with pump wheel (29) are held axially secured with one another on the end of the rotor shaft (28) with axial securing means acting axially on one another and/or by means of additional axial securing means.

**Revendications**

1. Groupe motopompe pour milieux gazeux ou en particulier liquides et en tant que ventilateur, compresseur, pompe ou analogue, en particulier en tant que motopompe pour filtre d'aquarium, qui présente un boîtier (14) avec un moteur électrique (15), qui est réalisé en tant que moteur synchrone à auto-démarrage avec rotor à aimant permanent (24), qui est logé dans une chemise ou garniture coaxiale (25) située dans l'entrefer et approximativement en forme de pot, et porte sur une section d'extrémité (12) de son arbre de rotor (28), une roue de pompe (29) avec moyeu (31) se trouvant dans une chambre de pompe (22), qui pénètre par une section axiale dans la chemise (25), le stator (26) étant contenu à rotation dans une partie de boîtier entourant la chemise (25), partie de préférence rendue étanche, et l'arbre de rotor (28) étant supporté à rotation sur un axe (44, 45), qui est maintenu à rotation et de préférence élastiquement à une extrémité dans la chemise (25) et à son autre extrémité dans une autre partie (48,18) du boîtier (14), caractérisé en ce qu'entre la roue de pompe (29), d' une part, et la section d'extrémité (12) de l'arbre de rotor (28), d'autre part, est agencée une douille intermédiaire (33) entraînée par l'arbre de rotor (28), sur laquelle la roue de pompe (29) conjointement avec son moyeu (31) est maintenue à rotation tout au moins dans certaines limites par rapport à elle, et en ce que la douille intermédiaire (33) présente au moins un mentonnet externe (54 à 56) faisant saillie radialement, auquel est associé sur la face interne du moyeu (31) de la roue de pompe (29), un appendice faisant saillie radialement vers l'intérieur dans la voie du mentonnet (54 à 56), qui est agencé sur une patte de freinage (60 à 62) pouvant s'écarter par flexion élastique de ressort approximativement tangentiellement à partir du moyeu (31) et au-delà de sa surface périphérique externe, patte qui se trouve sur la section axiale du moyeu (31) pénétrant dans la chemise (25) et est inactive dans un sens de rotation nominal de l'arbre de rotor (28) avec roue de pompe (29), mais qui au contraire peut s'écarter élastiquement dans un sens de rotation de démarrage opposé à celui-ci de l'arbre de rotor (28), au moyen du mentonnet (54 à 56) de la douille intermédiaire (33) et, dans la position écartée élastiquement, se trouve en contact d'application de freinage avec la face interne de la chemise (25) en tant que surface de frein, et engendre un couple de freinage sur la roue de pompe (29) pour l'arbre de rotor (28).

2. Groupe motopompe suivant la revendication 1, caractérisé en ce que la roue de pompe (29) est réalisée de telle sorte que le débit de pompe ne peut être obtenu qu'avec la rotation de la roue de pompe (29) dans le sens de rotation nominal, tandis qu'au contraire avec une rotation dans le sens de rotation qui lui est opposé, le milieu se trouvant à l'intérieur de la chambre de pompe (22) et entre les ailettes (30) de la roue de pompe (29) engendre un couple de freinage suffisant pour écarter élastiquement au moins une patte de freinage (60 à 62).

3. Groupe motopompe suivant la revendication 2, caractérisé en ce que la roue de pompe (29) présente essentiellement des ailettes radiales (30) qui sont incurvées en forme d'aubes dans le sens de rotation nominal.

4. Groupe motopompe suivant l'une des revendications 1 à 3, caractérisé en ce que la douille intermédiaire (33) est maintenue sans possibilité de déplacement axial sur la section d'extrémité (12) de l'arbre de rotor (28) et peut tourner librement par rapport à l'arbre de rotor (28) d'un angle périphérique important et présente au moins une butée radiale (38), que rencontre après avoir parcouru l'angle périphérique dans l'un ou l'autre sens de rotation, une butée radiale (51) de l'arbre de rotor (28) pour un entraînement en rotation dans le sens de rotation nominal ou un arrêt dans le sens de rotation de démarrage qui lui est opposé.

5. Groupe motopompe suivant l'une des revendications 1 à 4, caractérisé en ce que le moyeu (31) de la roue de pompe (29) présente sur sa face interne une butée fixe radiale (57 à 59), à laquelle est associée un des côtés dirigé dans le sens de rotation nominal (54 à 56) de la douille intermédiaire (33).

6. Groupe motopompe suivant l'une des revendications 1 à 5, caractérisé en ce que la patte de freinage au moins (60 à 62) est réalisée en tant que section d'arc de cercle, qui est en une pièce à une extrémité de la section d'arc de cercle avec la matière du moyeu (32) et pour le reste peut s'écarter librement élastiquement par rapport au moyeu ainsi que revenir élastiquement automatiquement.

7. Groupe motopompe suivant l'une des revendications 1-6, caractérisé en ce que la patte de freinage au moins (60 à 62), lors de la rotation de l'arbre de rotor dans le sens de rotation nominal est hors de prise et ramenée librement élastiquement, tandis qu'au contraire avec le sens de rotation de démarrage qui lui est opposé de l'arbre de rotor (28) avec douille intermédiaire (33), elle peut être amenée par son mentonnet associé (54 à 56) à la position de freinage écartée élastiquement.

8. Groupe motopompe suivant l'une des revendications 1-7, caractérisé en ce que le mentonnet au moins (54 à 56) est réalisé en tant qu'entretoise approximativement parallèle à l'axe.

9. Groupe motopompe suivant l'une des revendications 1-8, caractérisé en ce que le mentonnet au moins (55) présente sur un côté, qui est dirigé dans le sens de rotation nominal, une surface de butée en forme de gradin abrupte, approximativement radiale (66) et, sur l'autre côté dirigé vers l'autre sens de rotation de démarrage qui lui est opposé, une surface d'actionnement (67) s'élevant progressivement, en particulier approximativement tangentiellement ou en forme d'arc depuis la surface périphérique externe de la douille intermédiaire (33), pour la patte de freinage (61).

10. Groupe motopompe suivant l'une des revendications 1-9, caractérisé en ce que le moyeu (31) présente sur sa face interne, à un faible écartement angulaire après l'extrémité pouvant s'écarter librement élastiquement de la patte de freinage (61), une autre butée fixe (58), que rencontre la douille intermédiaire (33) avec son mentonnet (55) dans la position écartée élastiquement de la patte de freinage associée (61), en limitant la force exercée sur la patte de freinage (61), dans le sens périphérique.

11. Groupe motopompe suivant l'une des revendications 1-10, caractérisé en ce que l'appendice (64) de la patte de freinage au moins (61), s'épaissit, tel que considéré dans le sens de rotation correspondant au sens de rotation de démarrage à freiner (flèche 3), vers l'extrémité libre pouvant s'écarter élastiquement, progressivement radialement vers l'intérieur, en formant une surface d'engagement s'élevant progressivement (68) pour la surface d'actionnement (67) du mentonnet associé (55) de la douille intermédiaire (33).

12. Groupe motopompe suivant l'une des revendications 1-11, caractérisé en ce que la douille intermédiaire (33) présente trois mentonnets extérieurs (54 à 56).

13. Groupe motopompe suivant la revendication 12, caractérisé en ce que le moyeu (31) présente trois butées fixes (57 à 59) et trois pattes de freinage (60 à 62) dont chacune s'étend sur une zone angulaire périphérique entre deux butées fixes (57 à 59).

14. Groupe motopompe suivant l'une des revendications 1-13, caractérisé en ce que le moyeu (31) avec les ailettes (30) de la roue de pompe (29) ainsi qu'au moins une butée fixe (57 à 59) et au moins une patte de freinage (60 à 62), forme une unique pièce façonnée en matière plastique.

15. Groupe motopompe suivant l'une des revendications 1-13, caractérisé en ce que la douille intermédiaire (33) forme, avec au moins un mentonnet externe (54 à 56) et la butée radiale interne (38), une unique pièce façonnée en matière synthétique.

16. Groupe motopompe suivant l'une des revendications 1-15, caractérisé en ce qu'au moyeu (31) se raccorde en gradin une réduction de palier cylindrique (41), qui porte extérieurement les ailettes (30) de la roue de pompe (29) et est supportée sur une réduction cylindrique associée (34) de la douille intermédiaire (33), qui est supportée à son tour sur une section cylindrique (12) de la section d'extrémité de l'arbre de rotor.

17. Groupe motopompe suivant l'une des revendications 1-16, caractérisé en ce que la douille intermédiaire (33) et le moyeu (31) avec roue de pompe (29) sont maintenus positivement axialement sur l'extrémité de l'arbre de rotor (28) avec des moyens de fixation axiale s'engageant mutuellemnt axialement et/ou à l'aide de moyens de fixation axiale supplémentaires.

Fig. 1

Fig. 2

Fig. 3

Fig. 4

Fig. 5

Fig. 6

Fig. 7

Fig. 8